# EUROPEAN PATENT APPLICATION

(11) **EP 2 696 661 A1**
(43) Date of publication of application: **12.02.2014**
(21) Application number: 12188560.2
(22) Date of filing: 15.10.2012
(51) Int. Cl.: H05B 37/02, F21V 23/04

(54) **Lighting control system and lighting control method**

(30) Priority: 09.08.2012 JP 2012177205
(71) Applicant: Toshiba Lighting & Technology Corporation, Yokosuka-shi Kanagawa 237-8510 (JP)
(72) Inventor: Noguchi, Yoko, Kanagawa 237-8510 (JP); Ishiwata, Tomoko, Kanagawa 237-8510 (JP); Kawagoe, Makoto, Kanagawa 237-8510 (JP); Ono, Takayuki, Kanagawa 237-8510 (JP); Takahashi, Kenji, Kanagawa 237-8510 (JP); Nishigaki, Hidenori, Kanagawa 237-8510 (JP); Takahashi, Junko, Kanagawa 237-8510 (JP); Iwata, Fumie, Kanagawa 237-8510 (JP); Kawatsuru, Shigehisa, Kanagawa 237-8510 (JP); Kawano, Hitoshi, Kanagawa 237-8510 (JP); Uchino, Katsusuke, Kanagawa 237-8510 (JP)
(74) Representative: Bokinge, Ole

(57) **Abstract**

According to one embodiment, a lighting control unit turns on luminaires corresponding to a presence area among four detection areas adjacent to one another in a predetermined direction and a crossing direction. If there is one presence area among the four detection areas, the lighting control unit relatively reduces the brightness of the luminaires corresponding to remaining three absence areas. If there are two presence areas among the four detection areas, the lighting control unit relatively reduces the brightness of the luminaires on a side adjacent to the presence areas among the luminaires corresponding to the remaining two absence areas and turns off the remaining other luminaires. If there are three presence areas among the four detection areas, the lighting control unit turns off the luminaires corresponding to the remaining one absence area.

## Description

### FIELD

Embodiments described herein relate generally to a lighting control system including a plurality of luminaires set in a lighting space and a lighting control method.

### BACKGROUND

In the past, in a facility such as an office and a store, a lighting control system that controls a plurality of luminaires set in a lighting space of the facility is used. In the lighting control system, a communication function is installed in the luminaires. A lighting state of each of the luminaires can be individually controlled. Therefore, in the lighting control system, a lighting area and a dimming area can be set in a free layout using an area controller, which functions as a master set of the system, a luminance sensor, a human sensor, and the like.

### BRIEF DESCRIPTION OF THE DRAWINGS

FIGS. 1(a) to 1(d) are schematic explanatory diagrams of a lighting control method by a lighting control system according to an embodiment, wherein the presence of a person is detected in one of four detection areas in FIG. 1(a), the presence of people is detected in two of the four detection areas in FIGS. 1(b) and 1(c), and the presence of people is detected in three of the four detection areas in FIG. 1(d);
FIG. 2 is a schematic explanatory diagram of the lighting control system viewed from the ceiling side;
FIG. 3 is a schematic explanatory diagram of a luminaire of the lighting control system; and
FIG. 4 is a schematic explanatory diagram of the lighting control system.

### DETAILED DESCRIPTION

In general, according to one embodiment, a lighting control system includes a presence detecting section, a luminaire, and a control section. The presence detecting section detects the presence of a person in each of a plurality of detection areas in a lighting space. A plurality of the luminaires are provided in each of the detection areas of the lighting space. The control section is capable of subjecting the luminaires to lighting control. The control section turns on the luminaires corresponding to a detection area where the presence of the person is detected by the presence detecting section among four detection areas adjacent to one another in a predetermined direction and a crossing direction crossing the predetermined direction. Further, if the presence of the person is detected in one detection area among the four detection areas, the control section relatively reduces the brightness of the luminaires corresponding to the remaining three detection areas. If the presence of people is detected in two detection areas among the four detection areas, the control section relatively reduces the brightness of the luminaires on a side adjacent to the detection areas where the presence of the people is detected among the luminaires corresponding to the remaining two detection areas and turns off the remaining other luminaires. If the presence of the people is detected in three detection areas among the four detection areas, the control section turns off the luminaires corresponding to the remaining one detection area.

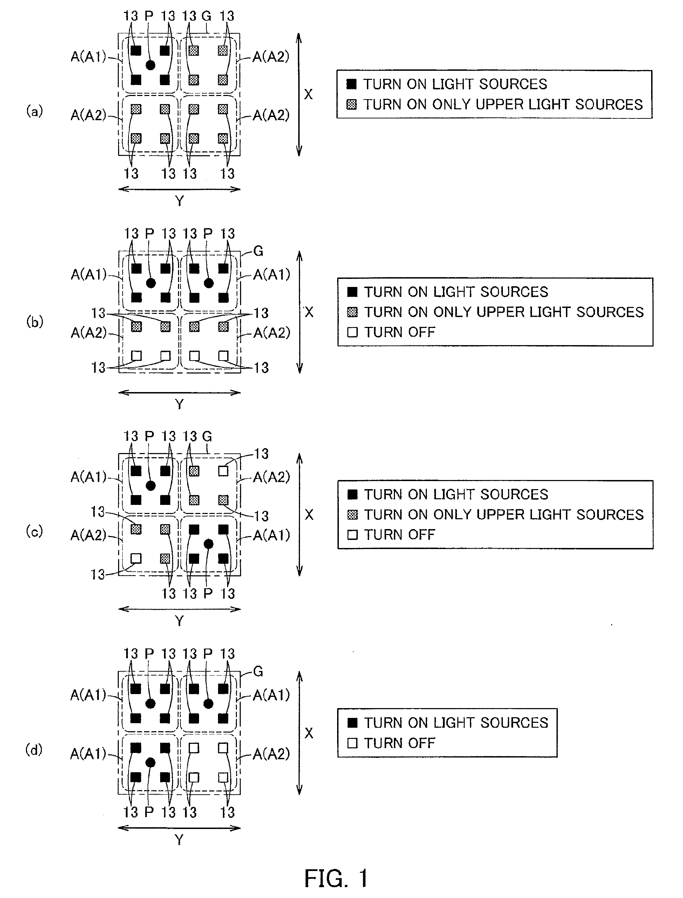

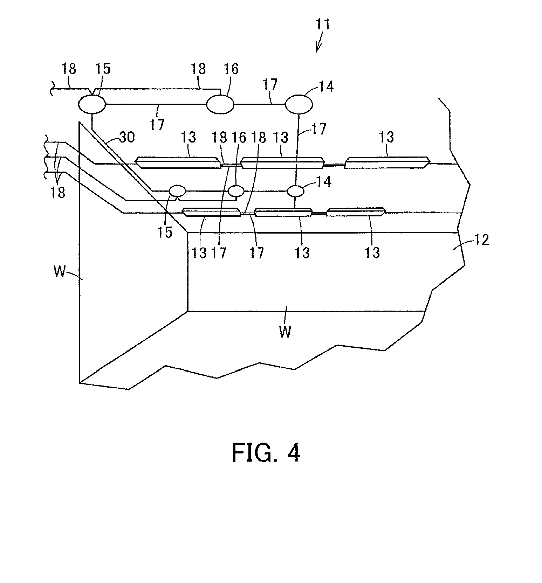

The configuration of a lighting control system according to an embodiment is explained below with reference to FIGS. 1(a) to 1(d) to FIG. 4.

As shown in FIGS. 1(a) to 1(d) to FIG. 4, a lighting control system 11 centrally controls lighting states of a plurality of luminaires 13 set side by side in the entire area of the ceiling or the like of a lighting space 12 in a room of a facility such as an office or a store. A sensor device 14, which is a human sensor functioning as a presence detecting section, is set for each of the plurality of luminaires 13 in the lighting space 12. The lighting control system 11 includes a lighting control unit 15 functioning as a control section that subjects the luminaires 13 to lighting control and a communication unit 16 that supplies a control signal from the lighting control unit 15 to the luminaires 13. A plurality of the lighting control units 15, a plurality of the communication units 16, and a plurality of the sensor devices 14 are connected to one another via a signal line 17 to be capable of communicating with one another. Electric power is supplied to the luminaires 13, the sensor devices 14, the lighting control units 15, and the communication units 16 from a not-shown power supply section such as a distribution panel via power supply lines 18.

The shape of the lighting space 12, the arrangement of the luminaires 13, and the like can be arbitrarily set. However, in this embodiment, to make the explanation clearer, for example, the lighting space 12 is formed in a square shape in plan view surrounded by walls W, the luminaires 13 are arranged in a matrix shape on the ceiling of the lighting space 12 along the longitudinal direction (an arrow X direction), which is a predetermined direction in plan view, of the lighting space 12 and the width direction (an arrow Y direction), which is a crossing direction crossing the longitudinal direction.

The luminaire 13 includes a luminaire main body 21, a plurality of upper light sources 22 and lower light sources 23 arranged in the luminaire main body 21, an upper lighting circuit 24 that turns on the upper light sources 22, a lower lighting circuit 25 that turns on the lower light sources 23, and a power supply section 26 functioning as a power supply for the lighting circuits 24 and 25 and the light sources 22 and 23. The luminaire 13 is arranged on the ceiling surface.

The luminaire main body 21 is formed, for example, laterally long. The upper light sources 22 are respectively arranged at both ends in the longitudinal direction of the luminaire main body 21. The lower light sources 23 are respectively arranged in lower parts along the longitudinal direction while being spaced apart from one another, for example, at substantially equal intervals.

The upper light sources 22 are upward irradiation light sources capable of irradiating light (light L1) to a further upward direction than the horizontal direction. Therefore, with the lighting of the upper light sources 22, the luminaire 13 functions as a light source for indirect lighting capable of lighting the ceiling surface.

The lower light sources 23 are downward irradiation light sources capable of irradiating light (light L2) to a further downward direction than the horizontal direction. Therefore, with the lighting of the lower light sources 23, the luminaire 13 is capable of directly lighting the floor surface and a person P.

The light sources 22 and 23 are dimmable light sources such as fluorescent lamps, bulbs, or LEDs. The light sources 22 and 23 are capable of being subjected to the lighting control independently from each other.

The lighting circuits 24 and 25 are arranged in the luminaire main body 21. The lighting circuits 24 and 25 convert electric power supplied from the power supply section 26 and turn on, turn off, and dim the light sources 22 and 23 according to a signal from the lighting control unit 15. The lighting circuits 24 and 25 respectively have peculiar addresses and have a function of specifying and receiving control signals to the own addresses transmitted from the lighting control unit 15 and transmitting lighting control states to the lighting control unit 15 together with the own addresses to enable the lighting control unit 15 to specify the lighting control states.

As the luminaires 13, luminaires all having the same luminous intensity distribution characteristic may be arranged. Alternatively, luminaires having arbitrary luminous intensity distribution characteristics, for example, luminaires having different luminous intensity distribution characteristics and different lighting directions can be selected and set in predetermined positions such as the vicinities of walls and other positions.

The sensor device 14 is an image sensor (an image recognition sensor) or the like that detects the presence of a person P in the lighting space 12. The number and the positions of the sensor devices 14 to be set can be arbitrarily set according to the breadth (the size), the shape, the arrangement, and the like of the lighting space 12. If a plurality of the sensor devices 14 are arranged, peculiar addresses are respectively set for the sensor devices 14. The sensor devices 14 are configured to communicate with the lighting control units 15 via the signal line 17 using the addresses.

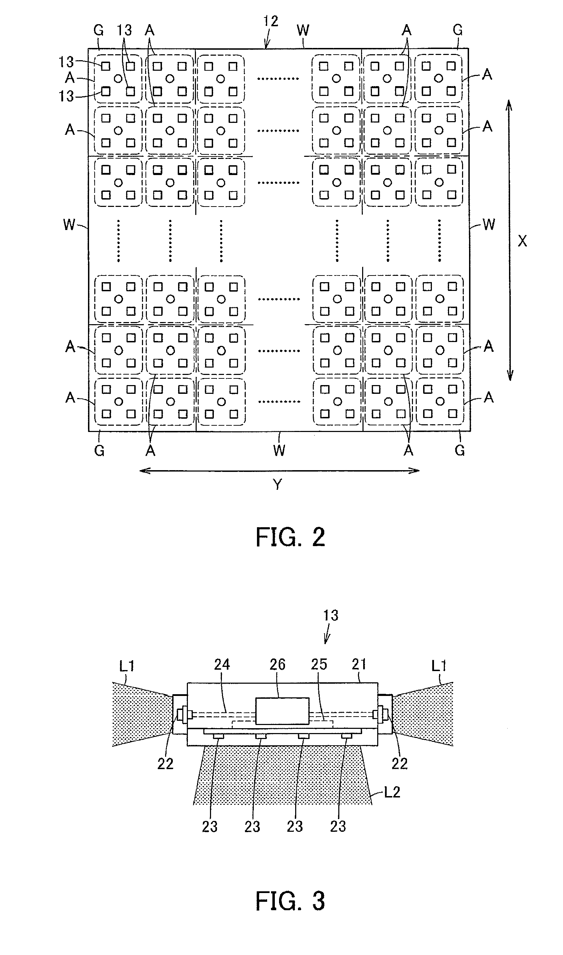

The sensor device 14 divides photographed image information into mesh-like detection areas A and analyzes the divided image information to two-dimensionally detect where in the lighting space 12 the person P is present. In other words, the sensor device 14 has a function of a location detecting section that detects the location of the person P (the detection area A where the person P is present) in the lighting space 12. In this embodiment, four detection areas A adjacent to one another in the up-down direction and the left-right direction in FIG. 2 form one detection area group G. For example, four luminaires 13 and one sensor device 14 are arranged in each of the detection areas A.

The lighting control units 15 are connected to one another via a signal line 30. For example, any one of the lighting control units 15 functions as a master set, i.e., an area controller in the lighting space 12. The other remaining lighting control units 15 function as slave sets, i.e., sub-controllers. The lighting control units 15 are configured to respectively have peculiar addresses and communicate with one another using the addresses.

In the detection area group G including four detection areas A adjacent to one another in a predetermined direction (the arrow X direction) and a crossing direction (the arrow Y direction) crossing the predetermined direction, the lighting control unit 15 turns on the upper light sources 22 and the lower light sources 23 of the luminaires 13 corresponding to the detection area A (a presence area A1) where the person P is present.

If the presence of the person P is detected in one detection area A (presence area A1) of the detection area group G, the lighting control unit 15 turns on only the upper light sources 22 of the luminaires 13 corresponding to the remaining three detection areas A (absence areas A2) and turns off the lower light sources 23 to reduce the brightness (illuminance) of the luminaires 13 (Fig. 1(a)).

If the presence of people P is detected in two detection areas A (presence areas A1) of the detection area group G, i.e., if the people P are present in two detection areas A adjacent to each other in the predetermined direction (the arrow X direction) or the crossing direction (the arrow Y direction) or if the people P are present in two detection areas A facing each other in an oblique direction crossing the predetermined direction (the arrow X direction) or the crossing direction (the arrow Y direction), the lighting control unit 15 turns on only the upper light sources 22 of the luminaires 13 adjacent to the detection areas A (the presence areas A1) where the people P are present among the luminaires 13 corresponding to the remaining two detection areas A (absence areas A2) and turns off the lower light sources 23 to reduce the brightness (illuminance) of the luminaires 13 and turns off the remaining other luminaires 13 (FIGS. 1(b) and 1(c)).

Further, if the presence of the people P is detected in three detection areas A (presence areas A1) of the detection area group G, the lighting control unit 15 turns off the luminaires 13 corresponding to the remaining one detection area A (absence area A2) (FIG. 1(d)).

According to the embodiment explained above, it is possible to appropriately adjust a feeling of brightness of the lighting space 12 according to the number of the detection areas A (the presence areas A1) where the presence of the people P is detected among the four detection areas A adjacent to one another in the predetermined direction (the arrow X direction) and the crossing direction (the arrow Y direction) crossing the predetermined direction. Further, it is possible to effectively secure the feeling of brightness of the lighting space 12 irrespective of the number of the people P present in the lighting space 12 while realizing energy saving.

If the number of the presence areas A1 where the people P are present is relatively small in the detection area groups G, in other words, if the number of the people P are relatively small in the lighting space 12, in the configuration in the past in which only the luminaires 13 in the presence areas A1 are turned on and the luminaires 13 in the other absence areas A2 are not turned on, the feeling of brightness of the lighting space 12 decreases to produce a gloomy atmosphere. Therefore, the luminaires 13 in the absence areas A2 around the presence areas A1 are turned on with reduced brightness (illuminance), specifically, only the upper light sources 22 are turned on. This makes it possible to increase the feeling of brightness of the lighting space 12. If the number of the presence areas A1 where the people P are present is relatively large in the detection area groups G, in other words, if the number of the people P are relatively large in the lighting space 12, the feeling of brightness of the lighting space 12 is increased by turning on the light sources 22 and 23 of the luminaires 13 in the presence areas A1. Therefore, the number of the luminaires 13 to be turned on in the absence areas A2 is reduced and only the necessary luminaires 13 are turned on with reduced brightness (illuminance), specifically, only the upper light sources 22 are turned on. Consequently, it is possible to realize energy saving while securing the feeling of brightness.

When the brightness of the luminaires 13 in the absence areas A2 is reduced, only the upper light sources 22 that light the ceiling surface are turned on and the lower light sources 23 that directly light the person P or the like are turned off. Therefore, light directly made incident on the eyes of the person P is suppressed. It is possible to secure the feeling of brightness while suppressing glare and realize a comfortable office environment.

In the embodiment explained above, as the luminaire 13, the luminaire 13 including the upper light sources 22 at both the ends of the elongated luminaire main body 21 and including the lower light sources 23 in the lower parts of the luminaire main body 21 is used. However, the luminaire 13 may include upper light sources in the outer circumference of a circular luminaire main body and include lower light sources in lower parts of the luminaire main body. Further, the luminaire 13 may be suspended from the ceiling surface and the upper light sources 22 that light the upward direction may be arranged in upper parts of the luminaire main body 21. Alternatively, all light sources are attached to the luminaire main body 21 in the same direction and upper light sources that light the upward direction and lower light sources that light the downward direction may be separated according to the structure of a reflection plate.

The lighting control system 11 is configured using, for example, a dimmable general luminaire 13 as the luminaire 13. In the control shown in FIGS. 1(a) to 1(d), instead of the control for turning on only the upper light sources 22 of the luminaire 13 and turning off the lower light sources 23, dimming lighting control for deepening a dimming degree of the luminaire 13 (reducing a dimming ratio) and reducing brightness (excluding control for reducing illuminance to zero, i.e., turning off the luminaire 13) may be performed. Even in this case, action and effects same as those explained above can be attained. A general-purpose luminaire 13 may be used to attain the action and effects. Therefore, versatility is further improved.

While certain embodiments have been described, these embodiments have been presented by way of example only, and are not intended to limit the scope of the inventions. Indeed, the novel systems and methods described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A lighting control system (11) comprising:
a presence detecting section (14) configured to detect presence of a person (P) in each of a plurality of detection areas (A) in a lighting space (12);
a plurality of luminaires (13) provided in each of the detection areas (A) of the lighting space (12); and
a control section (15) capable of subjecting the luminaires (13) to lighting control and configured to turn on the luminaires (13) corresponding to a detection area (A1) where the presence of the person (P) is detected by the presence detecting section (14) among four detection areas (A) adjacent to one another in a predetermined direction and a crossing direction crossing the predetermined direction, if the presence of the person (P) is detected in one detection area (A1), relatively reduce brightness of the luminaires (13) corresponding to the remaining three detection areas (A2), if the presence of people (P) is detected in two detection areas (A1), relatively reduce brightness of the luminaires (13) on a side adjacent to the detection areas (A1) where the presence of the people (P) is detected among the luminaires (13) corresponding to the remaining two detection areas (A2) and turn off the remaining other luminaires (13), and, if the presence of the people (P) is detected in three detection areas (A1), turn off the luminaires (13) corresponding to the remaining one detection area (A2).

2. The system (11) according to claim 1, wherein
the luminaires (13) include upper light sources (22) capable of irradiating light (L1) in a further upward direction than a horizontal direction and lower light sources (23) capable of irradiating light (L2) in a further downward direction than the horizontal direction, and
the control section (15) turns on the upper light sources (22) and the lower light sources (23) respectively of the luminaires (13) corresponding to a detection area (A1) where the presence of the person (P) is detected by the presence detecting section (14) among the four detection areas (A) adjacent to one another in the predetermined direction and the crossing direction crossing the predetermined direction, if the presence of the person (P) is detected in one detection area (A1), turns on only the upper light sources (22) of the luminaires (13) corresponding to the remaining three detection areas (A2), if the presence of the people (P) is detected in two detection areas (A1), turns on only the upper light sources (22) of the luminaires (13) on a side adjacent to the detection areas (A1) where the presence of the people (P) is detected among the luminaires (13) corresponding to the remaining two detection areas (A2) and turns off the remaining other luminaires (13), and, if the presence of the people (P) is detected in three detection areas (A1), turns off the luminaires (13) corresponding to the remaining one detection area (A2).

3. The system (11) according to claim 2, wherein
the luminaire (13) includes an elongated luminaire main body (21),
the upper light sources (22) are respectively arranged at both ends in a longitudinal direction of the luminaire main body (21), and
a plurality of the lower light sources (23) are arranged along the longitudinal direction in lower parts of the luminaire main body (21).

4. The system (11) according to claim 1, wherein the presence detecting section (14) is an image sensor.

5. A lighting control method comprising turning on luminaires (13) corresponding to a detection area (A1) where presence of a person (P) is detected among four detection areas (A) adjacent to one another in a predetermined direction and a crossing direction crossing the predetermined direction, if the presence of the person (P) is detected in one detection area (A1), relatively reducing brightness of the luminaires (13) corresponding to the remaining three detection areas (A2), if the presence of people (P) is detected in two detection areas (A1), relatively reducing brightness of the luminaires (13) on a side adjacent to the detection areas (A1) where the presence of people (P) is detected among the luminaires (13) corresponding to the remaining two detection areas (A2) and turning off the remaining other luminaires (13), and, if the presence of the people (P) is detected in three detection areas (A1), turning off the luminaires (13) corresponding to the remaining one detection area (A2).

6. The method according to claim 5, further comprising:
using luminaires (13) including upper light sources (22) capable of irradiating light in a further upward direction than a horizontal direction and lower light sources (23) capable of irradiating light in a further downward direction than the horizontal direction; and
turning on the upper light sources (22) and the lower light sources (23) of the luminaires (13) corresponding to a detection area (A1) where the presence of the person (P) is detected among the four detection areas (A) adjacent to one another in the predetermined direction and the crossing direction crossing the predetermined direction, if the presence of the person (P) is detected in one detection area (A1), turning on only the upper light sources (22) of the luminaires (13) corresponding to the remaining three detection areas (A2), if the presence of the people (P) is detected in two detection areas (A1), turning on only the upper light sources (22) of the luminaires (13) on a side adjacent to the detection areas (A1) where the presence of the people (P) is detected among the luminaires (13) corresponding to the remaining two detection areas (A2) and turning off the remaining other luminaires (13), and, if the presence of the people (P) is detected in three detection areas (A1), turning off the luminaires (13) corresponding to the remaining one detection area (A2).

7. The method according to claim 6, wherein, as the luminaire (13), a luminaire including an elongated luminaire main body (21), the upper light sources (22) respectively arranged at both ends in a longitudinal direction of the luminaire main body (21), and a plurality of the lower light sources (23) arranged along the longitudinal direction in lower parts of the luminaire main body (21) is used.

8. The method according to claim 5, wherein an image sensor is used as a presence detecting section (14).
